# EUROPÄISCHE PATENTSCHRIFT

(11) **EP 2 604 899 B1**
(45) Veröffentlichungstag und Bekanntmachung des Hinweises auf die Patenterteilung: **26.12.2018**
(21) Anmeldenummer: 12190704.2
(22) Anmeldetag: 31.10.2012
(51) Int. Cl.: F16L 5/14, F16L 5/04, F16L 3/22, H02G 3/04, H02G 3/22, A62C 2/06

(54) **Modulrahmen zur Befestigung einer Leitungsdurchführung an einem Bauteil**
Module frame for fixing a cable bushing onto a component
Cadre de module pour fixation d'un passage de conduite sur un composant

(30) Priorität: 14.12.2011 DE 102011088487
(43) Veröffentlichungstag der Anmeldung: 19.06.2013
(73) Patentinhaber: HILTI Aktiengesellschaft, 9494 Schaan (LI)
(72) Erfinder: Monden, Thomas, 87778 Stetten (DE)
(74) Vertreter: Hilti Aktiengesellschaft Corporate Intellectual Property

(56) Entgegenhaltungen:
- DE-A1- 10 018 249
- US-A- 2 813 692

## Beschreibung

Die Erfindung betrifft einen Modulrahmen zur Montage wenigstens einer Leitungsdurchführung an einem Bauteil mit einer an dem Bauteil anbringbaren Grundplatte, mehreren an der Grundplatte anbringbaren, nebeneinander angeordneten Flanschelementen, die jeweils ein Dichtelement aufweisen, und einem zwischen der Grundplatte und den Flanschelementen angeordneten flachen plattenförmigen Zwischenelement.

Leitungsdurchführungen zum Durchführen von Leitungen durch ein Bauteil sind beispielsweise aus der US 2004/0016190 A1 und der DE 10 2006 035 475 A1 bekannt. Derartige Leitungsdurchführungen werden beim Erstellen eines Bauteils, wie einer Wand oder einer Decke, oder nachträglich in dieses eingebaut. Insbesondere können die Leitungsdurchführungen in Betondecken oder -wände eingegossen werden oder es können nachträglich Durchführungen in das Bauteil gebohrt, gesägt oder geschnitten werden. Vorzugsweise sind derartige Leitungsdurchführungen mit einer Brandschutzfunktion ausgerüstet. Vom Zeitpunkt des Einbaus bzw. Eingießens in das Bauteil über die Installation der Leitung durch die Leitungsdurchführung bis hin zur Fertigstellung des Gebäudes besteht daher bereits ein Brandschutz. Wichtig bei derartigen Leitungsdurchführungen ist deren interne Dichtigkeit gegen gasförmige Medien, wie z. B. Rauchgas.

Neben den in der US 20040016190 A1 und der DE 10 2006 035 475 A1 beschriebenen rohrförmigen Leitungsdurchführungen sind solche bekannt, die einen rechteckigen Rahmen aufweisen, wie beispielsweise in dem Geschmacksmuster USD 502147S gezeigt und in der US 2004016193 A1, der US 2006138251 A1, der US 2007125018 A1, und der DE 10018249 A1 beschrieben. Die bekannten Leitungsdurchführungen werden üblicherweise direkt in die Bauteildurchbrüche oder wie im Falle der DE10018249 A1 in einen Installationsschacht eingesetzt.
Aus der US 2813692 A ist eine Kabeldurchführung für Flugzeugrümpfe mit einer Grundplatte, einer Verschlussplatte und Tüllen, durch die die Kabel geführt werden, bekannt.
Da aufgrund der wachsenden Anzahl an Datenverarbeitungsgeräten in Gebäuden, wie Krankenhäusern und Büros, insbesondere in einzelnen Räumen, nimmt der Bedarf an Leitungen für die Übertragung von digitalen Informationen zu. Modulare Leitungsdurchführungen sind so konzipiert, den Platzbedarf zur Durchführung der Leitungen durch eine Wand zu minimieren, um möglichst wenige Durchbrüche schaffen zu müssen. Da die Nachfrage nach solchen Kommunikationsleitungen, die durch Wände und Decken geführt werden müssen, zunimmt, ist es notwendig, mehrere Leitungsdurchführungen zu bündeln und mehrere davon in Reihe zu installieren.
Die US 20070175125 A1 beschreibt einen modularen Montagerahmen für Leitungsdurchführung, der eine flexible Belegung des Montagerahmens mit Leitungsdurchführungen ermöglicht. Das beschriebene Rahmensystem besteht aus zwei Längswinkeln und zwei Querwinkeln, das entsprechend der Belegung vom Anwender montiert wird.
Nachteilig an diesem System ist, dass es nur für Leitungsdurchführungen mit rechteckiger Rahmengeometrie geeignet ist. Rohrförmige Leitungsdurchführungen können nicht oder nur mit erheblichem mehr Aufwand durch den Anwender feuer- und rauchgasdicht in den Rahmen eingebaut werden.

Ferner ist an diesem System nachteilig, dass zur Abdichtung der Öffnung zwischen Bauteildurchbruch und Rahmen, zwischen der Leitungsdurchführung und dem Rahmen sowie zwischen benachbarten Leitungsdurchführungen, wenn der Rahmen mehrfach belegt wird, durch den Anwender Dichtelemente montiert werden müssen. Dies macht das bekannte System unpraktisch, da der Anwender einen Mehraufwand für die Installation hat und zudem das System fehleranfällig wird, beispielsweise wenn die Dichtelement vergessen oder an falscher Stelle montiert werden.

Ein weiterer Nachteil des bekannten Systems ergibt sich bei der Nachinstallation weiterer Leitungsdurchführungen in den bereits installierten und teilweise belegten Rahmen. Hierzu muss der gesamte Rahmen mit den bereits installierten Leitungsdurchführungen demontiert, der Bauteildurchbruch vergrößert und das gesamte System erneut installiert werden. Dementsprechend ergibt sich ein hoher Montageaufwand.

Es besteht daher Bedarf an einer Lösung, mit der Leitungsdurchführungen, insbesondere rohrförmige Leitungsdurchführungen, mit möglichst geringem Aufwand in ein Bauteil, wie eine Wand oder Decke, installiert werden können.

Die Aufgabe der Erfindung besteht darin, einen Modulrahmen zur Verfügung zu stellen, der die oben genannten Nachteile vermeidet, der insbesondere eine schnelle, einfache und sichere Installation von Leitungsdurchführungen in Bauteilen ermöglicht.

Dies wird durch einen Modulrahmen zur Montage wenigstens einer Leitungsdurchführung an einem Bauteil mit einer an dem Bauteil anbringbaren Grundplatte, mehreren an der Grundplatte angeordneten und nebeneinander angeordneten Flanschelementen, die jeweils ein Dichtelement aufweisen, und einem zwischen der Grundplatte und den Flanschelementen angeordneten flachen plattenförmigen Zwischenelement gelöst, in dem die Grundplatte, das Zwischenelement und die Flanschelemente mehrere zur Aufnahme von Leitungsdurchführungen an den Leitungsdurchführungsumfang angepassten Durchführungsausnehmungen aufweisen.

Zweckmäßig ist die Grundplatte rechteckig ausgebildet und hat bevorzugt eine Seitenlänge, die dem typischen Abstand zwischen zwei Längsträgern im Trockenausbau entspricht. Damit liegt die Seitenlänge im Bereich von 14 bis 18 Zoll (35,56 bis 45,72 cm) und 22 bis 26 Zoll (55,88 bis 66,04 cm). Aufgrund der bevorzugte Ausmaße des Modulrahmens ist dieser flexibel einsetzbar und kann sowohl an einer Massivwand, wie Mauerwerk, Beton und dergleichen, als auch an ein Trockenbaubauteil angebracht werden, wobei bei dem Trockenbaubauteil ferner noch die Möglichkeit gegeben ist, den Modulrahmen vor der Beplankung mit Gipskartonplatten auf dem Trockenbauständer oder nach der Beplankung mit Gipskartonplatten auf dieser anzubringen.

Dazu sind an der Grundplatte zusätzliche Ausnehmungen vorgesehen, um die Grundplatte an das Bauteil lösbar zu befestigen, wie ovale oder runde Löcher zur Durchführung von Befestigungsmitteln, wie beispielsweise Nägel, Schrauben und dergleichen.
Die Durchführungsausnehmungen sind bevorzugt rund, wobei sie nicht darauf beschränkt sind. Auch andere Geometrien, wie beispielsweise rechteckig oder quadratisch, sind möglich.
Die Größe der Durchführungsausnehmungen ist an den Leitungsdurchführungsumfang angepasst, so dass für gängige Leitungsdurchführungstypen die entsprechenden Modulrahmen bereitgestellt werden. Zweckmäßig sind die Durchführungen dergestalt, dass deren Größe etwas über der Größe der Leitungsdurchführung liegt, d.h. das ein Spalt zwischen Grundplatte und Leitungsdurchführung nach deren Installation bleibt, um eine leichtere Installation und einen Ausgleich zu ermöglichen, wenn bei einer Trockenbauwand zwei gegenüberliegende Modulrahmen nicht exakt auf gleicher Höhe angebracht wurden. Auch kann ein Verkannten der Leitungsdurchführung an der Grundplatte beim Einschieben in die Modulrahmen verhindert werden. Der Spalt darf jedoch nicht zu groß sein, da ansonsten eine sichere Fixierung der Leitungsdurchführung in dem Modulrahmen sowie eine Feuer- und Rauchgasdichtigkeit nicht mehr gewährleistet sein kann.

Bevorzugt sind die mehreren Durchführungsausnehmungen gleichmäßig beabstandet voneinander entlang der langen Mittellinie (M_{L}) der rechteckigen Grundplatte angeordnet.

Um eine einfache nachträgliche Montage des Modulrahmens an einer bereits Installierten Leitungsdurchführung zu ermöglichen bzw. bereits verlegte Leitungen oder Kabel nachträglich abzuschotten, ist die Grundplatte in einer bevorzugten Ausführungsform zweiteilig ausgebildet. Die Montage der beiden Grundplattenhälften an dem Bauteil sowie das Anbringen der Flanschelemente an der Grundplatte bewirkt einen sicheren Zusammenhalt der beiden Hälften, so dass keine weiteren Mittel zum Verbinden der beiden Hälften erforderlich sind, wobei denkbar ist, dass die Grundplatte bzw. die beiden Hälften mir derartigen Mitteln versehen sind.

In einer bevorzugten Ausführungsform ist die Grundplatte rechteckig und entlang der die kurzen Seiten symmetrisch teilenden Mittellinie in zwei Teile geteilt, wobei die Durchführungsausnehmungen mittig geteilt werden und beispielsweise im Falle einer runden Geometrie, die Form von Halbkreisen aufweisen.

In einer Ausführungsform des Modulrahmens weist die Grundplatte ferner an wenigstens zwei, gegenüberliegenden Außenkanten eine Randkontur auf, wobei die an gegenüberliegenden Außenkanten vorgesehene Randkontur bevorzugt dergestalt ist, dass beim Aneinanderreihen mehrerer Vorrichtungen die Randkonturen zweier benachbarten Vorrichtungen ineinandergreifen. Die Randkontur besteht beispielsweise aus einer kammähnlichen Struktur die durch quadratische Ausnehmungen gebildet wird, wobei sich die Bereiche der Ausnehmungen und die Bereiche der Grundplatte, die in die Ausnehmungen der benachbarten Grundplatte eingreifen können, alternierend angeordnet sind. Dabei verhalten sich die Randkonturen der gegenüberliegenden Außenkanten der Grundplatte wie Negativ und Positiv. Bevorzugt sind bei einer rechteckigen Grundplatte die kürzeren Seiten mit der Randkontur versehen. Weiter bevorzugt ist die Form der Randkontur dergestalt, dass sich die ineinandergreifenden Elemente nicht hinterschneiden, so dass in montierten Zustand etwa zwei Grundplatten nicht starr miteinander verbunden sind, sondern eine Bewegung relativ zueinander möglich ist, um beispielsweise eine ungenaue Montage auszugleichen und dennoch eine Verbindung zwischen zwei Modulrahmen herzustellen. So wird auch eine Bewegung des Bauteils in gewissem Maße aufgenommen, ohne, dass der Modulrahmen einer zu großen Spannung ausgesetzt wird.

Das Material der Grundplatte ist nicht beschränkt, wobei das Material zweckmäßig biegesteif ist, wodurch eine einfachere Handhabung und Montage an dem Bauteil sichergestellt wird. Die Grundplatte besteht bevorzugt aus einem Metall bzw. einer Metalllegierung, beispielsweise Stahl, oder einem geeigneten Kunststoff. Alternativ kann die Grundplatte auch eine Mineralfaserplatte oder Ähnliches sein.

Die Grundplatte kann ferner Elemente zur Versteifung aufweisen.

Die Flanschelemente weisen erfindungsgemäß jeweils einen eine Durchführung zur Aufnahme einer Leitungsdurchführung ausbildenden Hülsenbereich und einen flächigen Flanschbereich auf, wobei in dem Hülsenbereich das Dichtelement angeordnet ist. Der Hülsenbereich ist fest mit dem Flanschbereich verbunden, etwa durch anschweißen oder ankleben, oder einstückig mit diesem ausgebildet.

Der Hülsenbereich ist an die Geometrie der Leitungsdurchführung angepasst, so dass für gängige Leitungsdurchführungstypen die entsprechenden Modulrahmen bereitgestellt werden. Aus denselben Gründen wie die Durchführungsausnehmungen der Grundplatte ist der Hülsenbereich dergestalt, dass dessen Größe etwas über der Größe der Leitungsdurchführung liegt, d.h. das ein Spalt zwischen Hülsenbereich und Leitungsdurchführung nach deren Installation bleibt.

Damit die Leitungsdurchführung trotz des Spalts fest in dem Modulrahmen sitzt, weisen die Flanschelemente ferner mindestens ein Mittel zur Fixierung der Leitungsdurchführung auf. Dieses Mittel kann etwa durch eine Schraube oder einen Stift gebildet werden, die durch Ausnehmungen im Hülsenbereich in Richtung der Leitungsdurchführung, beispielsweise durch Schrauben, bewegt und in einer Endposition fixiert werden können.

Um den Spalt zwischen Hülsenbereich und Leitungsdurchführung rauchgasdicht zu verschließen, ist im Hülsenbereich auf der Seite der Durchführung ein Dichtelement vorgesehen. Bevorzugt umfasst das Dichtelement ein im Brandfall intumeszierendes Material. Damit wird nicht nur die Rauchgasdichtigkeit sondern auch die Feuerdichtigkeit des Flanschelements sichergestellt. Besonders vorteilhaft erweist sich ein Dichtelement aus einem Material, das den Spalt sowohl gegen Rauchgase abdichtet als auch im Brandfall intumesziert. Alternativ kann das Dichtelement mehrteilig aufgebaut sein, so dass ein Teil im Brandfall intumesziert und dicht gegenüberrauchgasen ist, wobei es sich zweckmäßig um den Teil handelt der am Hülsenbereich zum Anliegen kommt, und ein Teil den Restspalt zwischen Intumeszenzmaterial und Leitungsdurchführung gegen Rauchgase abdichtet. Das Dichtelement ist bevorzugt so ausgebildet bzw. besteht aus so einem Material, dass sich das Leitungselement einfach in den Modulrahmen einsetzen lässt und der Spalt selbständig, d.h. aufgrund der Materialeigenschaften des Dichtelements abgedichtet wird.

Vorteilhaft ist das Dichtelement als Band bzw. Streifen ausgebildet, dessen Breite der Höhe des Hülsenbereichs entspricht und dessen Länge dem Innenumfang des Hülsenbereichs entspricht, so dass der gesamte Innenumfang des Hülsenbereichs von dem Dichtelement bedeckt ist. Besonders vorteilhaft ist im Falle des zweiteiligen Flanschelements das Dichtelement so ausgebildet, dass sich die Dichtelemente der beiden Flanschelementhälften überlappen. Allerdings ist es für die Feuer- und Rauchgasdichtigkeit ausreichend, wenn die Dichtelemente auf Stoß kommen.

Das Dichtelement ist in dem Hülsenbereich angeordnet, bevorzugt fest an dem Hülsenbereich angebracht, etwa durch Verkleben mit diesem, so dass das Anbringen nicht durch den Anwender zu erfolgen hat. Dies verhindert ein Fehlmontage und ein Vergessen des Dichtelements.

In einer Ausführungsform des Modulrahmens sind die Flanschteile zweiteilig ausgebildet, wobei bevorzugt der Hülsenbereich und der Flanschbereich entlang einer Mittellinie des Flanschbereichs in zwei gleiche Teile geteilt werden, so dass der Hülsenbereich zwei Halbschalen bildet. Es ist aus Stabilitätsgründen und anwendungsbedingt nicht vorgesehen, den Flanschbereich vom Hülsenbereich zu trennen, um so die zweiteilige Ausführung zu ermöglichen. Eine nachträgliche Abschottung von Leitungen oder Kabeln bzw. eine nachträgliche Montage des Modulrahmens an bereits bestehende Abschottung ist ohne Demontage der Leitungsdurchführung nur möglich, wenn das Flanschteil so in zwei Teile getrennt ist, dass es wie eine Manschette um eine Leitungsdurchführung gelegt werden kann. Dementsprechend besteht das Dichtelement ebenfalls aus zwei Hälften. Anders ausgedrückt sind an beiden Flanschelementen die Hülsenbereiche mit einem Dichtelement versehen.
Das Material des Flanschelements ist, wie das Material der Grundplatte, nicht beschränkt, und zweckmäßig biegesteif. Das Flanschelement besteht bevorzugt aus einem Metall bzw. einer Metalllegierung, beispielsweise Blech oder Stahl, oder einem geeigneten Kunststoff. Alternativ kann die Grundplatte auch aus Mineralfasern oder Ähnlichem bestehen.

Um die Grundplatte und die Flanschelemente lösbar aneinander zu befestigen weisen beide Mittel hierzu auf. Diese Mittel können Ausnehmungen (Löcher) sein, durch die Befestigungsmittel, wie Schrauben oder Nieten, geführt werden können. Alternativ kann das Mittel an der Grundplatte ein Gewindestift und das Mittel am Flanschelement eine Ausnahme sein, die so am Flanschbereich positioniert ist, dass durch das Aufsetzen des Flanschelements auf die Grundplatte der Gewindestift durch die Ausnahme geführt wird. Eine feste Verbindung erfolgt dann durch eine Mutter, die auf den Gewindestift aufgeschraubt wird. Ion einer weiteren Alternative kann das eine Mittel eine Gewindebohrung und das andere eine Ausnehmung sein.
Im Falle einer zweiteiligen Grundplatte und zweiteiligen Flanschelementen werden die Flanschelemente so an der Grundplatte angebracht, dass die beiden Hälften des Flanschelements quer über die beiden Hälften der Grundplatte angebracht werden und die durch den Hülsenbereich gebildete Durchführung auf der Durchführungsausnahme der Grundplatte zum Liegen kommt. Damit werden sowohl die beiden Hälften der Grundplatte als auch die beiden Hälften des Flanschelements aneinander fixiert.

Die Flanschelemente können so ausgebildet sein, dass der Flanschbereich nur minimal über den Hülsenbereich hinausragt, um eine maximale Anzahl an Durchführungen zu schaffen. Hierbei entspricht der durch die Flanschelemente definierte Abstand der Durchführungen dem Abstand der Durchführungsausnehmungen der Grundplatte und des Zwischenelements. Alternativ kann der Flanschbereich aus so ausgebildet sein, dass zumindest eine Hälfte deutlich über den Hülsenberiech hinausragt, so dass der Flanschbereich als Abdeckung für offene Bereiche in der Grundplatte dient, wenn weniger Flanschelemente verwendet werden als Durchführungsausnehmungen in der Grundplatte vorgesehen sind. Dies bringt dem Anwender ein hohes Maß an Flexibilität. Für die Flanschelemente, die zwischen zwei weiteren Flanschelementen angeordnet sind, ist die Form des Flanschbereichs bevorzugt quadratisch.

Erfindungsgemäß weist der Modulrahmen ein Zwischenelement auf, das zwischen der Grundplatte und den Flanschelementen angeordnet ist und Ausnehmungen durch Durchführung einer Leitungsdurchführung aufweist.

Das Zwischenelement dient als thermische Sperre um im Brandfall die Grundplatte thermisch von den Flanschelementen zu trennen, und um zu verhindern, dass die Temperatur von einem Element, beispielsweise der Grundplatte, auf ein anderes Element, beispielsweise den Flanschbereich, übertragen wird. Ferner dient bei einer zweiteiligen Ausgestaltung der Grundplatte und der Flanschbereiche das Zwischenelement als Dichtelement und die Stöße zwischen den Einzelelementen rauchgasdicht zu verschließen.

Erfindungsgemäß ist das Zwischenelement ein separates Element. Als dieses entspricht seine Form erfindungsgemäß der der Grundplatte und kann analog dieser zweiteilig ausgebildet sein, wobei es entlang der die kurzen Seiten symmetrisch teilenden Mittellinie in zwei Teile geteilt ist. Dabei bilden die Durchführungsausnehmungen zwei halbkreisförmige Ausnehmungen. In dieser Ausgestaltung weist es eine Fläche auf, die mindestens der Fläche entspricht, die durch die Flanschelemente gebildet wird und höchstens der Fläche entspricht, die durch die Grundplatte definiert wird.

Die Durchführungsausnehmungen des Zwischenelements bzw. der aneinander angeordneten Zwischenelemente entsprechen in ihrer Größe der der Durchführungsausnehmungen der Grundplatte und der Durchführung der Flanschelemente.

In einer weiteren Ausgestaltung sind die Durchführungsausnehmungen des Zwischenelements kleiner als die Durchführungsausnehmungen der Grundplatte und die Durchführung des Flanschelements, welche gleich groß sind. Damit kann durch geeignete Wahl des Materials des Zwischenelements bei Bedarf eine zusätzliche Rauchgasdichtigkeit erreicht werden.

Erfindungsgemäß besteht das Zwischenelement aus einem nichtbrennbaren wärmeisolierenden Filz oder Gewebe.

Im Nachfolgenden wird ein Ausführungsbeispiel der Erfindung unter Bezugnahme auf die Beigefügten Zeichnungen näher beschrieben. Es zeigt:
- FIG. 1:: eine Explosionsdarstellung einer Ausführungsform eines Modulrahmens;
- FIG. 2:: den in Figur 1 gezeigten Modulrahmen in montierten Zustand; und
- FIG. 3:: eine Kombination aus drei montierten Modulrahmen.

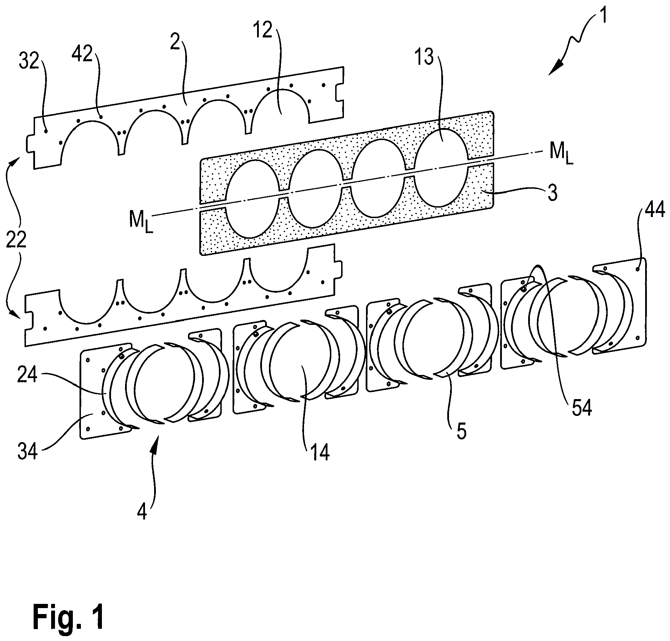

In FIG. 1 ist eine Explosionsdarstellung eines Modulrahmens dargestellt. Der Modulrahmen 1 umfasst eine zweiteilige Grundplatte 2, beispielsweise aus Metall, ein zweiteiliges Zwischenelement 3, beispielsweise aus Filz, und vier zweiteilige Flanschelemente 4, beispielsweise aus Metall.

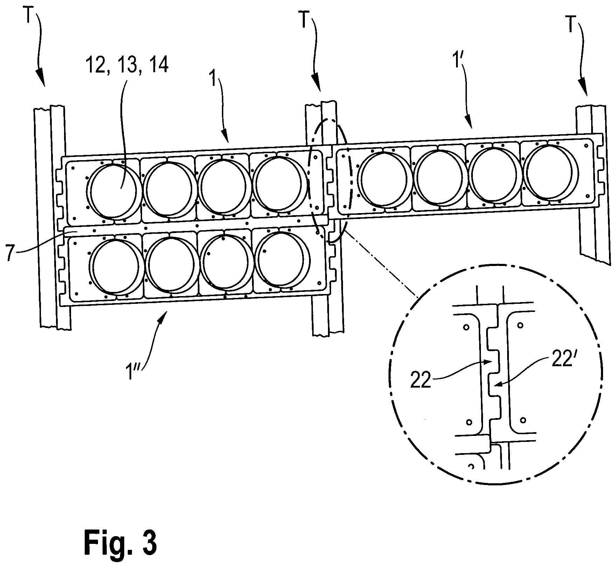

Der Modulrahmen 2 ist entlang der längeren Mittellinie M_{L} des durch die Grundplatte 2 gebildeten Rechtecks in zwei gleiche Teile geteilt und weist vier gleichmäßig nebeneinander angeordnete Durchführausnehmungen 12 in Form von Halbkreisen auf, die beim Zusammenfügen der beiden Hälften auf Stoß eine kreisrunde Ausnehmung ergeben. Der Abstand der beiden äußeren Ausnehmungen 12 ist dabei größer als der Abstand zwischen den benachbarten Ausnehmungen 12 selbst. Hierdurch wird gewährleistet, dass genüg Platz vorhanden ist, den Modulrahmen beispielsweise an Trägerelementen von Trockenbauwänden montieren zu können (vgl. FIG. 3), ohne dass die Träger die Installation von Leitungsführungen (nicht in der Abbildung gezeigt) und in den äußeren Ausnehmungen 12 behindert wird. Zur Montage der Grundplatte 2 und damit des Modulrahmens 1 an einem Bauteil sind Löcher 32 vorhanden. Ferner sind Löcher 42 vorhanden, durch die beispielsweise Schrauben zum Anbringen der Flanschelemente 4, welche ebenfalls Löcher 44 an den entsprechenden Stellen aufweisen, geführt werden können. Durch das Anbringen der Flanschelemente 4 an der Grundplatte 2 wird das Zwischenelement 3 befestigt.

Der Modulrahmen weist ferner entlang den kürzeren Außenkanten eine Randkontur 22 in Form von drei quadratischen, alternierend angeordneten Ausnehmungen auf jeder Seite auf. Die die Randkontur 22 bildenden Ausnehmungen sind so angeordnet, dass sich auf der gegenüberliegenden Seite eine Ausnehmung und ein durch zwei benachbarte Ausnehmungen gebildeter quadratischer Vorsprung gegenüberstehen. Diese Elemente können, wie in Fig. 3 gezeigt beim Aneinanderreihen von etwa zwei Modulrahmen ineinander Eingreifen und bilden so eine Führung zur einfacheren Positionierung und Montage der Modulrahmen. Die längeren Außenkanten weisen keine Randkontur auf.

Das Zwischenelement 3 ist in dem in FIG. 1 gezeigten Ausführungsbeispiel als separates nicht an den Flanschelementen 4 fixierten Element ausgebildet. Es besteht beispielsweise aus Filz und ist, wie die Grundplatte 2 zweiteilig, wobei die Teilung ebenfalls entlang der langen Mittellinie M_{L} erfolgt. Das Zwischenelement weist dadurch vier halbkreisförmige Durchführungsausnehmungen 13 auf, welche gleichmäßig beabstandet voneinander angeordnet sind und beim Zusammenfügen der beiden Hälften auf Stoß, wie dies bei der Montage des Modulrahmens 1 erfolgt, zwei kreisrunde Ausnehmungen 13 zur Durchführung von Leitungsführungen (nicht gezeigt) bilden. Wie bei der Grundplatte 2 ist der Abstand der beiden äußeren Ausnehmungen 13 von der kurzen Kante größer als der Abstand zwischen den benachbarten Ausnehmungen 13 selbst. Der Umfang des von dem Zwischenelement 3 gebildeten Rechtecks ist etwas kleiner als der Umfang des durch die Grundplatte 2 gebildeten Rechtecks. Dabei entspricht der Umfang des durch das Zwischenelement 3 gebildeten Rechtecks dem Umfang des durch die Flanschelemente 4 gebildeten Rechtecks.

Der Durchmesser der Durchführungsausnehmungen 13 des Zwischenelements entspricht dem Durchmesser der Durchführungsausnehmungen 12 der Grundplatte 2.

Die zweiteiligen Flanschelemente 4 bestehen aus einem Flanschbereich 34 und einem daran angeschweißten Hülsenbereich 24. Der Flanschbereich 34 kommt dabei zur Auflage an das Zwischenelement 3, welches wiederum zwischen der Grundplatte 2 und den Flanschelementen 4 zur Auflage kommt. Wie in Fig. 1 gezeigt, sind vier Flanschelemente in Reihe angeordnet, so dass sich im zusammengesetzten Zustand ein Modulrahmen 1 mit vier Durchführungsausnehmungen ergibt, die deckungsgleich ausgeführt sind. Der Flanschbereich 34 der beiden mittleren Flanschelemente 4 ist quadratisch wohingegen die Flanschbereiche 43 der beiden äußeren Flanschelemente 4 rechteckig ist.
Innen am Hülsenbereich 24 sind jeweils, d.h. pro Flanschelement zwei halbkreisförmige Dichtelemente, welche beispielsweise aus einem Band aus intumeszierendem Material bestehen, angeordnet, so dass sie den die Durchführung 14 bildenden Hülsenbereich 24 vollständig bedecken. Beim Zusammensetzen der beiden Hälften der Flanschelemente 4 ergeben die Dichtelemente 5 ebenfalls eine kreisrunde Durchführung. Die Dichtelemente sind so ausgestaltet, dass sie eine Leitungsdurchführung (nicht gezeigt) rauchgasdicht umschließen. Zur Fixierung der Leitungsdurchführung (nicht gezeigt) sind an jeweils einer Hälfte der Flanschelemente 4 im Hülsenbereich 24 Gewindebohrungen 54 vorgesehen, durch die Dornen geführt werden können. Bevorzugt sind die Gewindebohrungen 54 gegenüber angeordnet.
An der Innenseite der Hülsenbereiche Y eines Flanschelementes 4 sind zwei halbkreisförmige Dichtelementstreifen 5 angeordnet, die zur Anlagen an den Hülsenbereich kommen.

Der Hülsenbereich Y der Flanschelemente 4 weist jeweils ein Mittel 54 zur Fixierung einer Leitungsdurchführung (nicht in der Figur gezeigt) auf, wobei jeweils eine Hälfte der zweiteiligen Flanschelemente 4 mit einem Mittel 54 versehen ist, so dass die Mittel 54 gegenüber angeordnet sind.

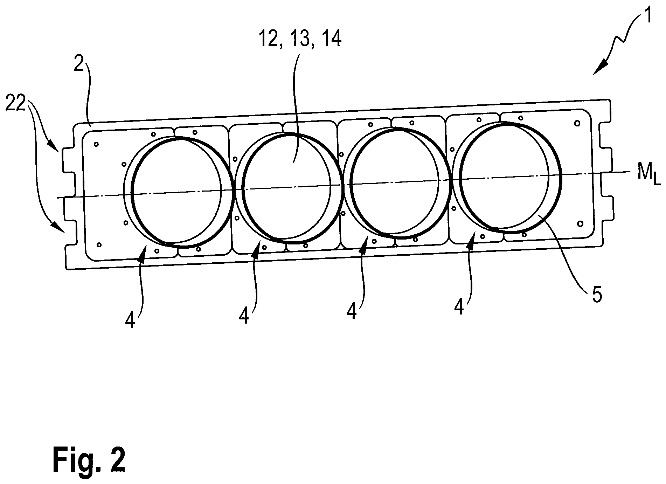

FIG. 2 zeigt den Modulrahmen 1 aus Fig. 1 in zusammengesetzter Form. Die beiden Durchführungsausnahmen 12, 13 und die Durchführung 14 weisen dieselbe Größe auf und liegen deckungsgleich aufeinander. Ferner liegen die Flanschelemente 3 deckungsgleich auf dem Zwischenelement (3) welches hierdurch in Fig. 2 nicht mehr sichtbar ist. Die Randkonturen 22 an den kürzeren Außenkanten verhalten sich wie positiv und negativ, wenn die Randkonturen entlang der die längere Mittellinie ML schneidende kürzeren Mittellinie (nicht dargestellt) gespiegelt werden.

In FIG. 3 ist eine Anordnung von drei Modulrahmen 1, 1' und 1" mit jeweils vier Durchführungen (12, 13, 14) gezeigt, wobei zwei Modulrahmen 1 und 1' in Reihe angeordnet sind und ein dritter 1" unterhalb des linken Modulrahmens 1 angeordnet ist. Die Breite der Modulrahmen 1, 1', 1" ist so gewählt, dass diese an den Trägern T einer Trockenbauwand befestigt werden können. Bei den in Reihe angeordneten Modulrahmen greifen die Randkonturen 22 und 22' ineinander, wie dies in dem vergrößerten Ausschnitt sichtbar wird. Die an den Trägern T übereinander angeordneten Modulrahmen 1 und 1" werden, gegebenenfalls zusätzlich, durch ein Element 7 aneinander fixiert.

Angrenzend an die Modulrahmen 1,1' und 1" können entsprechend Trockenbauwände angesetzt werden, die gegebenenfalls entsprechend zugeschnitten werden müssen, so dass die drei Modulrahmen 1, 1' und 1" vollständig von den Trockenbauwänden umschlossen werden. Alternativ könnten die Trockenbauwände direkt auf die Modulrahmen 1, 1' und 1" montiert werden, so dass diese vollständig bedeckt sind. Dies könnte dann von Interesse sein, wenn noch nicht feststeht, wie viele Leitungsdurchführungen geplant sind und an welcher Stelle. In diesem Fall müssten dann an den entsprechenden Stellen die Trockenbauwand ausgeschnitten werden.

## Patentansprüche

1. Modulrahmen (1) zur Montage wenigstens einer Leitungsdurchführung an einem Bauteil mit einer an dem Bauteil anbringbaren Grundplatte (2), mehreren an der Grundplatte (2) angeordnete und nebeneinander angeordneten Flanschelementen (4),
die jeweils ein Dichtelement (5) aufweisen, und einem zwischen der Grundplatte (2) und den Flanschelementen (4) angeordneten flachen plattenförmigen Zwischenelement (3), wobei die Grundplatte (2), das Zwischenelement (3) und die Flanschelemente (4) mehrere zur Aufnahme von Leitungsdurchführungen an die Leitungsführungsdurchmesser angepassten Durchführungsausnehmungen (12, 13, 14) aufweisen, wobei die Flanschelemente (4) jeweils einen eine Durchführung (14) zur Aufnahme einer Leitungsdurchführung bildenden Hülsenbereich (24) und einen flächigen Flanschbereich (34) aufweisen, wobei das Dichtelement (5) in dem Hülsenbereich (24) angeordnet ist, **dadurch gekennzeichnet, dass** das Zwischenelement (3) ein separates Element ist, dessen Form der Form der Grundplatte (2) entspricht und das Zwischenelement (3) aus einem nichtbrennbaren wärmeisolierenden Filz oder Gewebe besteht.

2. Modulrahmen nach Anspruch 1, **dadurch gekennzeichnet, dass** die Grundplatte (2) und das Zwischenelement (3) rechteckig mit einer kurzen und einer langen Seite ausgebildet sind.

3. Modulrahmen nach Anspruch 2, **dadurch gekennzeichnet, dass** die mehreren Durchführungsausnehmungen (12, 13) gleichmäßig beabstandet voneinander entlang der langen Mittellinie (M_{L}) angeordnet sind.

4. Modulrahmen nach einem der vorhergehenden Ansprüche, **dadurch gekennzeichnet, dass** die Grundplatte (2) und das Zwischenelement (3) zweiteilig ausgebildet sind.

5. Modulrahmen nach Anspruch 2 und 4, **dadurch gekennzeichnet, dass** die Grundplatte (2) und das Zwischenelement (3) entlang einer langen, die kurzen Seiten symmetrisch teilenden Mittellinie in zwei Teile geteilt sind, wobei die Durchführungsausnehmungen (12, 13) zwei halbkreisförmige Ausnehmungen bilden.

6. Modulrahmen nach einem der vorhergehenden Ansprüche, **dadurch gekennzeichnet, dass** die Grundplatte (2) ferner an wenigstens zwei, gegenüberliegenden Außenkanten eine Randkontur (22) aufweist.

7. Modulrahmen nach Anspruch 6, **dadurch gekennzeichnet, dass** die an gegenüberliegenden Außenkanten vorgesehene Randkontur (22) dergestalt ist, dass beim Aneinanderreihen mehrerer Vorrichtungen die Randkonturen (22) zweier benachbarten Vorrichtungen ineinandergreifen.

8. Modulrahmen nach einem der vorhergehenden Ansprüche, **dadurch gekennzeichnet, dass** die Flanschelemente (4) ferner ein Mittel (54) zur Fixierung der Leitungsdurchführung aufweisen.

9. Modulrahmen nach einem der vorhergehenden Ansprüche, **dadurch gekennzeichnet, dass** das Dichtelement (5) ein im Brandfall intumeszierendes Material umfasst.

10. Modulrahmen nach einem der vorhergehenden Ansprüche, **dadurch gekennzeichnet, dass** die Flanschelemente (4) zweiteilig ausgebildet sind.

11. Modulrahmen nach Anspruch 10, **dadurch gekennzeichnet, dass** der Hülsenbereich (24) und der Flanschbereich (34) entlang der Mittellinie des Flanschbereichs in zwei gleiche Teile geteilt werden, wobei der Hülsenbereich zwei Halbschalen bildet.

12. Modulrahmen nach einem der vorhergehenden Ansprüche, **dadurch gekennzeichnet, dass** die Grundplatte (2) und die Flanschelemente (4) aus Metall bestehen.

13. Modulrahmen nach einem der vorhergehenden Ansprüche, **dadurch gekennzeichnet, dass** die Durchführungsausnehmungen (13) des Zwischenelements (3) kleiner sind als die Durchführungsausnehmungen (12) der Grundplatte (2) und die Durchführung (14) der Flanschelemente (4), welche gleich groß sind.

## Claims

1. Modular frame (1) for mounting at least one line lead-through on a component, comprising
a base plate (2) that can be applied to the component,
several flange elements (4) arranged alongside one another on the base plate (2) and each comprising a sealing element (5) and
a flat, plate-shaped intermediate element (3) arranged between the base plate (2) and the flange elements (4),
wherein the base plate (2), the intermediate element (3) and the flange elements (4) comprise several through recesses (12, 13, 14) designed to receive line lead-throughs and adapted to the line lead-through diameter, wherein the flange elements (4) each comprise a sleeve region (24) forming a passage (14) designed to receive a line lead-through, as well as a flat flange region (34) and wherein the sealing element (5) is arranged in the sleeve region (24), **characterised in that** the intermediate element (3) is a separate element the shape of which corresponds to the shape of the base plate (2) and the intermediate element (3) consists of a non-combustible, heat-insulating felt or fabric.

2. Modular frame according to claim 1, **characterised in that** the base plate (2) and the intermediate element (3) are rectangular with a short side and a long side.

3. Modular frame according to claim 2, **characterised in that** the several through recesses (12, 13) are arranged at uniform intervals along the long centre line (M_{L}).

4. Modular frame according to one of the preceding claims, **characterised in that** the base plate (2) and the intermediate element (3) have a two-part design.

5. Modular frame according to claims 2 and 4, **characterised in that** the base plate (2) and the intermediate element (3) are divided into two parts along a long centre line symmetrically dividing the short sides, wherein the through recesses (12, 13) form two semi-circular recesses.

6. Modular frame according to one of the preceding claims, **characterised in that** the base plate (2) further comprises an edge contour (22) on at least two opposing outer edges.

7. Modular frame according to claim 6, **characterised in that** the edge contour (22) provided on opposing outer edges is designed in such a manner that, when several devices are arranged in a row, the edge contours (22) of two adjacent devices engage with one another.

8. Modular frame according to one of the preceding claims, **characterised in that** the flange elements (4) further comprise a means (54) for fixing the line lead-through.

9. Modular frame according to one of the preceding claims, **characterised in that** the sealing element (5) includes a material that is intumescent in the event of a fire.

10. Modular frame according to one of the preceding claims, **characterised in that** the flange elements (4) have a two-part design.

11. Modular frame according to claim 10, **characterised in that** the sleeve region (24) and the flange region (34) are divided into two equal parts along the centre line of the flange region, wherein the sleeve region forms two half-shells.

12. Modular frame according to one of the preceding claims, **characterised in that** the base plate (2) and the flange elements (4) consist of metal.

13. Modular frame according to one of the preceding claims, **characterised in that** the through recesses (13) in the intermediate element (3) are smaller than the through recesses (12) in the base plate (2) and the passages (14) in the flange elements (4), which are of equal size.

## Revendications

1. Cadre modulaire (1) pour le montage d'au moins un passage de conduite sur un élément de construction, comportant une plaque de base (2) pouvant être fixée sur l'élément de construction, plusieurs éléments de rebord (4) agencés sur la plaque de base (2) et agencés les uns à côté des autres, lesquels éléments de rebord comportent respectivement un élément d'étanchéité (5), et un élément intermédiaire plat en forme de plaque (3) agencé entre la plaque de base (2) et les éléments de rebord (4), dans lequel la plaque de base (2), l'élément intermédiaire (3) et les éléments de rebord (4) comportent plusieurs ouvertures de passage (12, 13, 14) adaptées au diamètre du passage de conduite pour recevoir des passages de conduite, dans lequel les éléments de rebord (4) comportent respectivement une zone de gaine (24) formant un passage (14) pour recevoir un passage de conduite et une zone de rebord plate (34), dans lequel l'élément d'étanchéité (5) est agencé dans la zone de gaine (24), **caractérisé en ce que** l'élément intermédiaire (3) est un élément séparé dont la forme correspond à la forme de la plaque de base (2) et l'élément intermédiaire (3) est constitué d'un feutre ou d'un tissu thermiquement isolant et non combustible.

2. Cadre modulaire selon la revendication 1, **caractérisé en ce que** la plaque de base (2) et l'élément intermédiaire (3) sont formés rectangulaires avec un côté court et un côté long.

3. Cadre modulaire selon la revendication 2, **caractérisé en ce que** les ouvertures de la pluralité des ouvertures de passage (12, 13) sont agencées à égale distance les unes des autres le long de l'axe long (M_{L}).

4. Cadre modulaire selon l'une des revendications précédentes, **caractérisé en ce que** la plaque de base (2) et l'élément intermédiaire (3) sont formés en deux parties.

5. Cadre modulaire selon les revendications 2 et 4, **caractérisé en ce que** la plaque de base (2) et l'élément intermédiaire (3) sont divisés en deux parties le long d'un axe long séparant symétriquement les côtés courts, dans lequel les ouvertures de passage (12, 13) forment deux ouvertures en forme de demi-cercles.

6. Cadre modulaire selon l'une des revendications précédentes, **caractérisé en ce que** la plaque de base (2) comporte en outre un contour d'arête (22) sur au moins deux arêtes extérieures opposées.

7. Cadre modulaire selon la revendication 6, **caractérisé en ce que** le contour d'arête (22) prévu sur des arêtes extérieures opposées est conçu de telle sorte que les contours d'arête (22) de deux dispositifs adjacents viennent en prise l'un avec l'autre lors de la mise en butée de plusieurs dispositifs.

8. Cadre modulaire selon l'une des revendications précédentes, **caractérisé en ce que** les éléments de rebord (4) comportent en outre des moyens (54) pour fixer le passage de conduite.

9. Cadre modulaire selon l'une des revendications précédentes, **caractérisé en ce que** l'élément d'étanchéité (5) comprend un matériau intumescent en cas d'incendie.

10. Cadre modulaire selon l'une des revendications précédentes, **caractérisé en ce que** les éléments de rebord (4) sont formés en deux parties.

11. Cadre modulaire selon la revendication 10, **caractérisé en ce que** la zone de gaine (24) et la zone de rebord (34) sont divisées en deux parties égales le long de l'axe de la zone de rebord, dans lequel la zone de rebord forme deux demi-coquilles.

12. Cadre modulaire selon l'une des revendications précédentes, **caractérisé en ce que** la plaque de base (2) et les éléments de rebord (4) sont en métal.

13. Cadre modulaire selon l'une des revendications précédentes, **caractérisé en ce que** les ouvertures de passage (13) de l'élément intermédiaire (3) sont plus petites que les ouvertures de passage (12) de la plaque de base (2) et que le passage (14) des éléments de rebord (4) qui sont de taille identique.
